# EUROPÄISCHE PATENTSCHRIFT

(11) **EP 3 445 681 B1**
(45) Veröffentlichungstag und Bekanntmachung des Hinweises auf die Patenterteilung: **09.09.2020**
(21) Anmeldenummer: 17719836.3
(22) Anmeldetag: 24.04.2017
(51) Int. Cl.: B65G 17/46

(54) **VORRICHTUNG ZUM BEWEGEN VON PRODUKTEN**
DEVICE FOR MOVING PRODUCTS
DISPOSITIF SERVANT À DÉPLACER DES PRODUITS

(30) Priorität: 29.04.2016 DE 102016107976
(43) Veröffentlichungstag der Anmeldung: 27.02.2019
(73) Patentinhaber: Weber Maschinenbau GmbH Breidenbach, 35236 Breidenbach (DE)
(72) Erfinder: BAAK, Rico, 35080 Bad Endbach (DE)
(74) Vertreter: Manitz Finsterwald Patent- und Rechtsanwaltspartnerschaft mbB
(86) Internationale Anmeldenummer: PCT/EP2017/059610
(87) Internationale Veröffentlichungsnummer: WO 2017/186620

(56) Entgegenhaltungen:
- EP-A1- 0 049 208
- EP-A1- 2 594 510
- WO-A1-2010/003482
- WO-A1-2015/048642
- WO-A2-2007/143867
- DE-A1-102013 218 394
- FR-A1- 2 342 918
- JP-A- H1 017 125
- JP-A- 2004 059 008
- JP-U- S63 154 531
- US-A- 3 941 237
- US-B2- 8 944 241

## Beschreibung

Die Erfindung betrifft eine Vorrichtung zum Bewegen von Produkten. Die Vorrichtung umfasst eine Mehrzahl individuell bewegbarer Transportmover zum Transport der Produkte, ein Bahnsystem für die Transportmover, in welchem die Transportmover entlang wenigstens einer vorgegebenen Bahn in einer Transportrichtung bewegbar sind, und eine Steuereinrichtung zum Steuern der Bewegungen der Transportmover in dem Bahnsystem, wobei die Transportmover jeweils zumindest einen mit dem Bahnsystem zusammenwirkenden Läufer und wenigstens einen am Läufer angebrachten Träger für Produkte umfassen.

Bei dem Produkt kann es sich beispielsweise um ein Lebensmittelprodukt, z.B. Wurst, Käse, Fleisch oder dergleichen, handeln. Das Lebensmittelprodukt kann als aufgeschnittene Portion transportiert werden.

Insbesondere bei der Produktion von Ein- oder Mehrsorten-Packungen, die eine oder mehrere Portionen aus beispielsweise Wurst- und/oder Käsescheiben enthalten, werden Fördersysteme benötigt, um die mittels einer oder mehrerer Aufschneidevorrichtungen, insbesondere so genannter Slicer, erzeugten und Portionen oder Teilportionen bildenden Lebensmittelscheiben einer Verpackungsvorrichtung zuzuführen.

Das Fördersystem dient in der Praxis nicht lediglich dem Transport der Portionen vom Slicer zur Verpackungsvorrichtung, sondern hat zusätzliche, von der jeweiligen Anwendung abhängige Funktionen zu erfüllen, die dem Fachmann grundsätzlich bekannt sind und von denen an dieser Stelle lediglich beispielhaft die Pufferung und die Formatbildung entsprechend den Anforderungen einer Verpackungsvorrichtung genannt werden sollen. Unmittelbar im Anschluss an den Slicer können außerdem Portionierungs- sowie Komplettierungsaufgaben zu erfüllen sein. Ferner werden die Portionen in der Praxis meist auch in diesem Bereich der Förderstrecke gewogen.

Diese und weitere Aufgaben eines Fördersystems auf dem Gebiet der Handhabung von Portionen aus mittels Slicern von insbesondere laib- oder stangenförmigen Lebensmittelprodukten abgetrennten Scheiben werden derzeit mit Förderbandsystemen zufriedenstellend gelöst. Allerdings sind Förderbandsysteme mit einem hohen mechanischen Aufwand verbunden und grundsätzlich auf die Handhabung eines Stromes von Portionen ausgelegt. Es ist nicht oder allenfalls bedingt möglich, mit einem Förderbandsystem Einfluss auf eine einzelne Portion zu nehmen. Problematisch insbesondere im Hinblick auf den geforderten schonenden Transport der Portionen sind außerdem z.B. die Übergänge zwischen aufeinanderfolgenden Förderbandabschnitten. Des Weiteren lassen sich mit Förderbändern naturgemäß nur gerade Förderstrecken oder aus geradlinigen Abschnitten bestehende Förderstrecken realisieren, d.h. die Flexibilität bei der Auslegung einer Förderstrecke ist bei Förderbandsystemen begrenzt. Genauso sind die Möglichkeiten der gesamten Anlage begrenzt, z.B. bezüglich der zu verarbeitenden Produkte und der Portions- und Formatsatzbildungsmöglichkeiten. Außerdem ist in Verbindung mit im Lebensmittelbereich eingesetzten Förderbandsystemen ein vergleichsweise hoher Aufwand bei der Reinigung erforderlich, um die hohen Hygienestandards einhalten zu können.

Bekannt, z.B. aus DE 10 2014 106 400 A1, ist auch eine Transportvorrichtung mit einer Mehrzahl individuell bewegbarer Transportmover zum Transport der Portionen, und einem Bahnsystem für die Transportmover, in welchem die Transportmover entlang wenigstens einer vorgegebenen Bahn in einer Transportrichtung bewegbar sind. Eine Steuereinrichtung steuert hierbei die Bewegungen der Transportmover in dem Bahnsystem.

Die Transportmover können einzeln oder jeweils als zusammengeschlossene Einheit bewegt werden.

Eine derartige Bewegungsvorrichtung hat gegenüber herkömmlichen Förderbandsystemen viele Vorteile. So können die Portionen beispielsweise von der Aufnahme bis zur Abgabe ohne eine weitere Portionsübergabe transportiert werden. Im Vergleich dazu weisen Förderbandsysteme viele Übergänge zwischen einzelnen Bändern auf. Diese Übergänge können die Portionen, z.B. deren Aufbau oder Struktur, eventuell negativ beeinflussen. Durch das Bahnsystem werden Portionsübergaben vermieden oder wenigstens minimiert. Ferner können Sensoren eingespart werden, welche z.B. als Lichtschranken zur Überprüfung der Lagen der Portionen bei Förderbandsystemen notwendig sind.

Auch fahren immer nur belegte Transportmover los, sodass keine Lücken entstehen und kein Umlauf von leeren Transportmovern auftritt.

Die Transportmover umfassen jeweils zumindest einen mit dem Bahnsystem zusammenwirkenden Läufer und wenigstens einen am Läufer angebrachten Träger für Portionen. Vorzugsweise transportiert jeder Transportmover direkt oder indirekt auf dem Träger eine Portion. Ein Transportmover kann mehrere Läufer für den Träger aufweisen. Eine derartige Transportmover-Einheit wird auch als Tandempuck bezeichnet. Jeder Transportmover kann also zumindest eine Portion transportieren.

Auch können mehrere Portionen auf einem Träger aufgenommen werden, beispielsweise nebeneinander. Ein derartiger Träger, auf dem zwei Portionen nebeneinander abgelegt und transportiert werden können, wird auch als Tandem-Träger bezeichnet.

Ferner können mehrere, z.B. zwei unmittelbar aufeinander folgende, Transportmover gemeinsam eine oder mehrere Portionen transportieren.

Ein für diesen Zweck grundsätzlich verwendbares Transportsystem, auf das hiermit im Hinblick auf das Erfordernis der Ausführbarkeit ausdrücklich Bezug genommen wird, wird von der Firma MagneMotion Inc. mit Sitz in Devens, Massachusetts, USA, angeboten. Dieses System basiert auf einem sogenannten LSM-Antrieb, also auf einem Antrieb durch lineare Synchronmotoren, der von einem sogenannten linearen Induktionsmotor (LIM-Antrieb) zu unterscheiden ist. Im Unterschied zu einem LIM-Antrieb wird bei einem LSM-Antrieb ein Magnetfeld nicht mittels des sogenannten elektromagnetischen Wanderfeldes induziert, sondern das Magnetfeld wird durch Permanentmagnete bereitgestellt. Wenn der Läufer des Linearmotors die Permanentmagnete trägt und der Stator des Linearmotors das elektromagnetische Wanderfeld erzeugt, dann kann man sich das Antriebsprinzip eines LSM-Antriebs bildlich so vorstellen, dass der mit dem Permanentmagneten versehene Transporter von dem sich längs des Stators bewegenden Magnetfeld über die Transportstrecke gezogen wird. Ein solches Transportsystem bzw. Antriebsprinzip ist beispielsweise in WO 2003/029651 A2 und WO 2010/085670 A1 beschrieben. Auf diese Dokumente wird hiermit bezüglich der Offenbarung eines möglichen Antriebs- bzw. Funktionsprinzips für die Erfindung ausdrücklich Bezug genommen.

Ein derartiges Transportsystem ist zwar sehr flexibel an die jeweiligen Gegebenheiten anpassbar, jedoch ist dieses System vergleichsweise kostenintensiv. Gerade bei längeren Transportstrecken kann daher auf günstige Überführungsstrecken zurückgegriffen werden. Hierbei kann es sich z.B. um Förderbänder oder Transportketten handeln.

Transportketten mit mehreren zusammenhängenden Kettengliedern, Transportkettensysteme sowie Vorrichtungen, welche ein Transportkettensystem und ein magnetisches Bahnsystem umfassen, sind grundsätzlich bekannt.

Dabei handelt es sich um Vorrichtungen, welche lediglich in Funktionsbereichen als magnetisches Bahnsystem ausgebildet sind. In den Funktionsbereichen werden verschiedene Anforderungen an das Bahnsystem gestellt, z.B. in Bezug auf Taktung, Positionierung, Vorwärts- bzw. Rückwärtsbewegungen und/oder Geschwindigkeiten.

In den übrigen Bereichen, insbesondere in reinen Überführungsstrecken ohne besondere Anforderungen, wird eine einfache Schlepptechnik mit einer Transportkette eingesetzt.

Dabei stehen die Transportmover einfach mit ihrer Unterseite auf der Oberfläche der Transportkette. Das durch den Magnetteil recht hohe Eigengewicht der Transportmover sorgt für eine ausreichend große Haftreibungskraft. Kommt es trotzdem zu einem Schlupf zwischen Transportkette und Transportmover, so ist dies unkritisch.

Herkömmlich werden die Transportmover auf Überführungsstrecken ohne besondere Anforderungen nicht überwacht und müssen neu in das magnetische Bahnsystem eingebracht werden. Dies erfordert einerseits eine mechanische Eintaktung und andererseits eine steuerungstechnische Erfassung, z.B. mittels RFID-Chips und zugeordneten Leseeinheiten in zumindest einem Übergabebereich.

Grenzen hat dieses System besonders im Hinblick auf Hygieneanforderungen sowie bei der Verwendung von Transportmovern mit Aufbauten, welche über die Grundabmessungen einzelner Transportmover hinausgehen, also beispielsweise Portionsträger oder Halter für die Portionsträger. Die Aufbauten können insbesondere in und entgegen der Bewegungsrichtung auskragen. Bei herkömmlichen Systemen besteht die Gefahr, dass die Aufbauten bei einem Aufstauen bzw. Zusammenschieben der Transportmover in einem Transportkettensystem kollidieren.

Zudem ist die Gestaltung einer Strecke mit Steigungs- und Gefälle-Bereichen durch die Haftreibung zwischen Transportmover und Transportkette begrenzt. Es müssten z.B. für das Überwinden eines Höhenniveaus recht lange Wege mit geringen Steigungen zurückgelegt werden.

Um einen besseren Halt der Transportmover an einer Transportkette zu gewährleisten, sind Kettenglieder mit einer magnetischen Oberfläche bekannt. Eine Verletzungsgefahr durch starke Magnetkräfte wird dabei ausgeschlossen, da die Transportmover auf dem gesamten Förderweg fixiert sind. Es ist keine einfache Entnahme der Transportmover aus dem System möglich.

Die Magnete werden dabei von oben her an die Kettenglieder angeschraubt bzw. ferromagnetische Werkstoffe, z.B. Stahl, sind als Elemente auf einem Kettenglied fixiert. Dies ist aber für die Lebensmittelindustrie aus Hygienegründen ungeeignet, auch weil diese Werkstoffe keine Lebensmittelzulassung besitzen. So können sich in den Ritzen zwischen dem angeschraubten Magneten und dem Kettenglied Verschmutzungen ansammeln.

DE 10 2013 218394 A1 offenbart eine Vorrichtung nach dem Oberbegriff des Anspruchs 1.

Es ist daher eine Aufgabe der Erfindung, eine Vorrichtung zum Bewegen von Produkten zu schaffen, welche auf einfache und kostengünstige Weise eine variable Bahnführung ermöglichen, wobei insbesondere ein hohes Maß an Hygiene gewährleistet wird.

Die Lösung dieser Aufgabe erfolgt durch eine Vorrichtung zum Bewegen mit den Merkmalen des Anspruchs 1.

Eine Transportkette für ein System zum Bewegen von Läufern von Transportmovern zur Aufnahme von Produkten weist mehrere zusammenhängende Kettenglieder auf. Erfindungsgemäß umfassen die Läufer einen Permanentmagneten, über den der Läufer mit magnetisch wirksamem Material des Kettengliedes zusammenwirkt. Der Permanentmagnet ist vorzugsweise in die Unterseite des Läufers integriert.

Das magnetisch wirksame Material kann magnetisch, z.B. als Permanentmagnet oder Elektromagnet, oder magnetisierbar, vorzugsweise als ferromagnetisches Material, ausgebildet sein. Als ferromagnetisches Material eignet sich z.B. Stahl, Eisen oder Ferrit.

Das magnetisch wirksame Material ist zumindest teilweise von einer Hygieneschicht bedeckt bzw. vollständig von der Hygieneschicht umschlossen. Dadurch wird z.B. verhindert, dass das magnetisch wirksame Material mit dem Läufer bzw. dem Produkt unmittelbar in Kontakt gelangt. Auch bilden sich keine Produktablagerungen im Bereich des magnetisch wirksamen Materials.

Die Hygieneschicht kann magnetisch passiv ausgebildet sein und/oder nichtmetallisches Material, z.B. ein Kunststoffmaterial, umfassen bzw. aus diesem bestehen.

Vorzugsweise bildet die Hygieneschicht eine Außenseite des Kettengliedes, mit der ein jeweils gehaltener Läufer unmittelbar zusammenwirkt bzw. die ein jeweils gehaltener Läufer berührt.

So kann insbesondere ein Abschnitt des Kettengliedes selbst eine Hygieneschicht bilden und das magnetisch wirksame Material z.B. an der Oberseite ummanteln. Das Kettenglied kann z.B. magnetisch passiv ausgebildet sein und/oder nichtmetallisches Material, z.B. ein Kunststoffmaterial, umfassen bzw. aus diesem bestehen.

Aufgrund der Hygieneschicht kann die Transportkette auch beispielsweise im Bereich der Lebensmittelverarbeitung eingesetzt werden. Durch das magnetisch wirksame Material kann die Transportkette eine variable Bahnführung mit vergleichsweise starken Steigungen aufweisen, da die Läufer durch die magnetischen Kräfte auf der Transportkette gehalten werden.

Es können somit insbesondere Lebensmittelportionen variabel transportiert werden. Im Rahmen der Erfindung ist der Begriff "Portion" breit zu verstehen. Eine Portion kann dementsprechend aus nur einer einzigen Scheibe bestehen. Alternativ kann eine Portion mehrere Scheiben umfassen, die in einer grundsätzlich beliebigen Relativanordnung vorliegen können, beispielsweise in einer sogenannten Stapel- oder Schindelanordnung, wie sie auf dem hier in Rede stehenden technischen Gebiet dem Fachmann bekannt sind. Bei der Portion kann es sich um eine Gesamtportion handeln, wie sie abschließend verpackt und im Handel angeboten wird. Alternativ kann die Portion eine Teilportion sein, die erst zusammen mit einer oder mehreren weiteren Teilportionen, die wiederum jeweils eine oder mehrere Scheiben umfassen können, eine Gesamtportion bildet. Die Teilportionen einer Gesamtportion können aus unterschiedlichen Produktsorten gebildet sein, so dass durch Zusammenstellen mehrerer Teilportionen eine Mehrsorten-Portion erzeugt werden kann und nach deren Verpackung somit eine Mehrsorten-Packung vorliegt. Bei den Scheiben kann es sich beispielsweise um vergleichsweise dünne Scheiben handeln, wie sie in Form von Wurst- oder Käseaufschnitt allgemein bekannt sind. Alternativ kann es sich bei den Scheiben jeweils um im Vergleich zu Aufschnitt relativ dicke Stücke wie beispielsweise Frischfleischstücke handeln.

Eine Mehrsorten-Portion kann aus Scheiben unterschiedlicher Sorte, Form und/oder Ablageform bestehen. Erfindungsgemäß können ferner auch mehrere jeweils sortenreine Verpackungen gemischt und in einem vorgebbaren Verhältnis einer gemeinsamen Umverpackung zugeführt werden.

Mit anderen Worten handelt es sich im Rahmen der Erfindung bei einer Portion um die im Hinblick auf die Transportaufgabe kleinste Einheit, die einerseits über eine bestimmte Strecke transportiert werden muss und die gegebenenfalls -je nach Anwendung - andererseits zusätzlich zu weiteren Portionen in Beziehung gesetzt werden muss, um die jeweiligen Anforderungen der Gesamtanlage, die eine oder mehrere Aufschneidevorrichtungen, insbesondere Slicer, das Transportkettensystem, ein Bahnsystem und/oder eine oder mehrere Verpackungsvorrichtungen umfasst, zu erfüllen. Beispielsweise kann sich die Anforderung auf die Bildung von Formaten beziehen, wie sie für die jeweils vorgesehene Verpackungsvorrichtung bereitgestellt werden müssen.

Die Aufnahme einer Portion kann an einem Funktionspunkt, z.B. Portionierbereich, erfolgen, indem die Portion unmittelbar von einer Aufschneidevorrichtung empfangen wird. In diesem Fall kann direkt auf den Träger des Transportmovers geschnitten werden. Anschließend kann die Portion auf dem Transportmover durch die gesamte Anlage bewegt werden, insbesondere einschließlich einer Abgabe der Portion an eine Verpackungsvorrichtung im Abgabebereich. Die gesamte Anlage kann hierbei als Transportkettensystem und/oder Bahnsystem ausgebildet sein.

Es ist alternativ auch möglich, dass die Transportmover erst im Portionierbereich die Träger, mit oder ohne Portion, erhalten.

Alternativ kann die Portion bzw. ein Träger von einer herkömmlichen Fördereinrichtung, z.B. einem Förderband, an die Transportmover übergeben werden. So kann beispielsweise zunächst auf ein Förderband geschnitten und die Portion abtransportiert werden. Anschließend kann eine Übergabe der Portion von dem Förderband an ein Transportkettensystem bzw. ein Bahnsystem erfolgen. Dieses Transportkettensystem bzw. Bahnsystem kann als multifunktionales Zwischenglied zwischen der Aufschneidevorrichtung und einer Verpackungsvorrichtung dienen. Die Portionen können entweder direkt an die Verpackungsvorrichtung oder z.B. zunächst an eine Einlegevorrichtung, z.B. ein Einlegeband, übergeben werden, über welches die Portion dann zu einer Verpackungsvorrichtung gelangt.

Die Übergabe geschnittener Portionen auf die Transportmover kann über herkömmliche Bandanlagen und Einlegevorrichtungen an Einlegepunkten erfolgen. Dabei kann eine Teilstrecke des Transportkettensystems bzw. Bahnsystems unter einem Einlegeband mit gleicher Längsausrichtung hindurch geführt werden. Alternativ kann auch eine Teilstrecke des Transportkettensystems bzw. des Bahnsystems quer, insbesondere im rechten Winkel, zum Einlegeband an einen Einlegepunkt geführt werden. Auf diese Weise kann beispielsweise eine Teilportion mit einer anderen Orientierung auf einen Transportmover abgelegt werden.

Mit jeweils einem oder zwei Transportmovern und einem entsprechenden Träger können wahlweise die Portionen einzeln oder immer zwei Portionen, z.B. mit einem Tandem-Träger, transportiert werden. Portionen sind hierbei und generell beispielhaft zu verstehen und es sind erfindungsgemäß ganz allgemein zu transportierende Produkte oder Objekte umfasst.

Das Bahnsystem kann als Kreislauf bzw. Ringstrecke zwischen mindestens einem Portionierbereich und mindestens einem Abnahmebereich und/oder Verpackungsbereich ausgebildet sein. Es kann insbesondere eine Transportkette als Rückführstrecke vorgesehen sein, auf der z.B. eine Reinigung der Portionsträger erfolgt. Die Bahn des Bahnsystems kann leere bzw. unbeladene Transportmover einspurig aus dem Verpackungsbereich bewegen. Dann kann ein Übergang in eine vorzugsweise einspurige Rückführstrecke erfolgen. Auf der Zuführungsseite des Portionierbereichs kann erneut ein Übergang vom Transportkettensystem auf ein Bahnsystem erfolgen.

Die Portionierbereiche können auch direkt Aufschneidebereiche oder Einlegebereiche sein. Es sind nämlich an dieser Stelle auch reine Einlegepunkte denkbar, sodass Lebensmittelprodukte in irgendeiner Form nach einer Behandlung dort nur aufgegeben oder zusammengestellt werden können. Auch ist dort eine Aufnahme von Trägern mit und ohne Produkt möglich.

Jeweils ein Transportmover kann direkt oder indirekt auf einem zugeordneten Portionsträger eine Portion transportieren. Vorzugsweise eine, denn er könnte auch mehrere nacheinander aufnehmen, welche dann in Fahrtrichtung hintereinander liegen würden.

Weiterbildungen der Erfindung sind auch den abhängigen Ansprüchen, der Beschreibung sowie den beigefügten Zeichnungen zu entnehmen.

Gemäß einer Ausführungsform ist das magnetisch wirksame Material vollständig von der Hygieneschicht umschlossen. Das magnetisch wirksame Material kann in ein Kettenglied beispielsweise eingegossen und/oder silikoniert sein. Dabei können ohnehin vorhandene Aussparungen im Kettenglied genutzt werden.

Das magnetisch wirksame Material kann sich also insbesondere in einem geschlossenen Hohlraum bzw. einer Kammer befinden. Vorzugsweise kann es in die umgebende Struktur des Kettengliedes eingebettet bzw. mit dieser eingefasst sein.

Ferner kann das magnetisch wirksame Material mehreren Hohlräumen bzw. Kammern zugeordnet sein.

Der Hohlraum bzw. die Kammer besitzt vorzugsweise eine möglichst dünne Wand an der Oberseite des Kettengliedes, also in Richtung des Permanentmagneten des Transportmovers. So kann ein ohnehin vorhandener Hohlraum bzw. eine Kammer, z.B. eine durch die Kunststoff-Formgebung bedingte Rippenstruktur oder eine Tasche, sinnvoll genutzt werden, da der Hohlraum bzw. die Kammer des Kettengliedes aus Hygienegründen im Lebensmittelbereich ohnehin geschlossen und/oder gefüllt werden müsste.

Der Hohlraum bzw. die Kammer ist vorzugsweise hygienegerecht versiegelt, sodass kein Spalt nach außen hin entsteht. Vorteilhafterweise ist das magnetisch wirksame Material in das Kettenglied eingegossen oder sogar in den umgebenden Kunststoff bzw. Edelstahl eingeformt. So entsteht eine möglichst geschlossene Oberfläche. Hinterschneidungen sowie Übergänge können vermieden werden.

Alternativ kann das magnetisch wirksame Material auch von unten her zugänglich sein. Der Hohlraum bzw. die Kammer kann also vorzugsweise derart in das Kettenglied eingeformt sein, dass die Öffnung, in die das magnetisch wirksame Material eingebacht wird, von unten her, an der vom Transportmover abgewandten Seite, zugänglich ist. Auf diese Weise ist eine Austauschbarkeit gewährleistet, wobei zugleich hohen Hygieneanforderungen entsprochen wird.

Nach einer weiteren Ausführungsform ist das magnetisch wirksame Material in einem zentralen Bereich des Kettengliedes angeordnet. In diesem Bereich ist die Wirkung auf den Permanentmagneten des Läufers maximal. Da die Transportkette in einem Randbereich auf einer Kettenführung aufliegt, sollte die Kettenführung nicht aus einem ferromagnetischen Werkstoff bestehen. Ansonsten würde die Reibung zwischen der Kettenführung und der Transportkette durch eine erhöhte Normalkraft vergrößert, zumal dort auch eine starke Anziehung durch einen Permanentmagneten gegeben wäre.

Alternativ kann das magnetisch wirksame Material jedoch gleichwohl auch in einem Randbereich des Kettengliedes, z.B. im Bereich einer Kettenführung für eine flächige Auflage der Transportkette, angeordnet sein. Nachteilig hierbei ist, wie erwähnt, der höhere Verschleiß, da die Transportkette in diesen Bereichen durch die Anziehung des Permanentmagneten des Läufers stärker angedrückt wird.

Gemäß einer weiteren Ausführungsform ist das magnetisch wirksame Material zumindest zu einem Teil der äußeren Kontur des Kettengliedes geometrisch ähnlich. Das magnetisch wirksame Material schmiegt sich somit insbesondere an das Kettenglied an und steht nicht über dieses vor. Spalte, Hinterschneidungen oder dergleichen werden dadurch vermieden.

Die Transportmover umfassen jeweils wenigstens einen mit einem der Kettenglieder zusammenwirkenden Läufer, der zumindest einen Permanentmagneten umfasst, und wenigstens einen am Läufer angebrachten Träger für Produkte.

Die Transportmover sind jeweils über ihren Läufer an dem Kettenglied durch Magnetkraft gehalten. Das magnetisch wirksame Material des Kettengliedes ist zumindest teilweise von einer Hygieneschicht bedeckt.

Möglich, aber nicht zwingend, ist eine geschlossene Transportstrecke. Die genaue Ausgestaltung ist abhängig von der Art und Weise des Übergangs zu anderen

Systemen bzw. Einrichtungen, z.B. zu magnetischen Bahnsystemen oder Förderbandsystemen.

Die Transportmover sind durch die Kettenglieder in Transportrichtung bewegbar. Dadurch, dass die Läufer durch Magnetkraft an den Kettengliedern gehalten sind, können auch z.B. Steigungen oder relativ scharfe Kurven bewältigt werden, ohne dass sich die Läufer von den Kettengliedern lösen. Durch die Magnetkraft wird die Normalkraft und somit die Haftreibungskraft vergrößert.

Das magnetisch wirksame Material des Kettengliedes kann vollständig umschlossen sein, z.B. eingegossen oder silikoniert. Alternativ kann dieses auch von unten her zugänglich sein.

Vorzugsweise ist das magnetisch wirksame Material in einem zentralen Bereich des Kettengliedes angeordnet.

Die Abstände zwischen den Transportmovern im Transportkettensystem können von der Eintaktung durch einen Linearmotor am Übergang abhängig sein.

Die Zuordnung eines Transportmovers zu einem Kettenglied bleibt in der Regel nach dem Übergang erhalten. Der Transportmover verschiebt sich somit vorzugsweise nicht, wenn er einmal platziert wurde.

Gemäß einer Ausführungsform weist nur jedes n-te Kettenglied ein magnetisch wirksames Material auf, wobei n eine ganze Zahl größer als 1 ist und insbesondere n = 2 oder n = 3 gilt. So können insbesondere nur bestimmte Kettenglieder ein magnetisch wirksames Material aufweisen, wobei diese derart voneinander beabstandet sind, dass sich ein vorbestimmter Abstand zwischen den Transportmovern ergibt. Sensoren zur Erfassung der Transportmover sind somit nicht notwendig.

Ein magnetisch wirksames Material kann lediglich in einem Kettenglied der Transportkette oder in mehreren, z.B. alternierend in jedem zweiten, dritten, vierten usw., Kettenglied vorgesehen sein. Selbst bei der Übergabe auf ein Kettenglied ohne magnetisch wirksames Material würde ein Transportmover durch den Förderbetrieb, erst recht aber bei Steigungen oder Gefälleabschnitten im Bahnverlauf, einfach bis zum nächsten Kettenglied, welches magnetisch wirksames Material aufweiset, zurück- oder vorrutschen.

Alternativ kann auch jedes Kettenglied ein magnetisch wirksames Material aufweisen.

Die Erfindung betrifft auch eine Vorrichtung zum Bewegen von Produkten, mit einer Mehrzahl individuell bewegbarer Transportmover zum Transport der Produkte.

Bei dem Produkt kann es sich um eine Portion handeln, die wenigstens eine von einem Lebensmittelprodukt, insbesondere mittels einer Aufschneidevorrichtung, insbesondere eines Hochgeschwindigkeits-Slicers, abgetrennte Scheibe umfasst. Die Vorrichtung umfasst ein Bahnsystem für die Transportmover, in welchem die Transportmover entlang wenigstens einer vorgegebenen Bahn in einer Transportrichtung bewegbar sind, und eine Steuereinrichtung zum Steuern der Bewegungen der Transportmover in dem Bahnsystem.

Die Transportmover umfassen jeweils zumindest einen mit dem Bahnsystem zusammenwirkenden Läufer und wenigstens einen am Läufer angebrachten Träger für Produkte.

Erfindungsgemäß ist ein Transportkettensystem dem Bahnsystem vorgelagert, dem Bahnsystem nachgelagert und/oder in das Bahnsystem integriert.

Ein Transportkettensystem ist demnach erfindungsgemäß mit einem magnetischen Bahnsystem kombiniert. Längere Transportstrecken, in denen die Transportmover im Wesentlichen lediglich transportiert werden, können somit als relativ kostengünstige Transportketten ausgebildet sein. Die vergleichsweise teuren Bahnsysteme können dagegen in Bereichen eingesetzt werden, in denen eine besondere Bewegungsgenauigkeit gefordert wird und/oder in denen etwas mit den Produkten bzw. Transportmovern geschieht, also z.B. eine Handhabung, Übergabe und/oder Pufferung stattfindet.

Ferner betrifft die Erfindung eine Vorrichtung zum Bewegen von Produkten, mit einer Mehrzahl von Transportmovern zum Transport der Produkte, mit einem Bahnsystem für die Transportmover, in welchem die Transportmover entlang wenigstens einer vorgegebenen Bahn in einer Transportrichtung bewegbar sind. Ferner umfasst die Vorrichtung eine Steuereinrichtung zum Steuern der Bewegungen der Transportmover in dem Bahnsystem.

Erfindungsgemäß ist ein Transportkettensystem dem Bahnsystem vorgelagert, dem Bahnsystem nachgelagert und/oder in das Bahnsystem integriert , das zumindest eine umlaufende Transportkette mit mehreren zusammenhängenden Kettengliedern und wenigstens einen Antrieb zum Antreiben der Kettenglieder umfasst.

Die Transportmover umfassen jeweils zumindest einen Läufer, der zumindest einen Permanentmagneten aufweist, und wenigstens einen am Läufer angebrachten Träger für Produkte.

Der Läufer ist dazu ausgebildet, sowohl mit dem Bahnsystem als auch mit zumindest einem der Kettenglieder zusammenzuwirken.

Es ist wenigstens ein Übergabebereich vorgesehen, an dem die Transportmover zwischen dem Bahnsystem und dem Kettensystem übergebbar sind. Das Bahnsystem und das Transportkettensystem überlappen einander im Übergabebereich mit einer Führungs- und/oder Halteeinrichtung für die Transportmover.

Durch die Überlappung können die Transportmover bequem von einem System zum anderen System übergeben werden, wodurch eine variable Bahnführung gewährleistet wird.

Die Transportmover werden somit über Scherkräfte und nicht über Zugkräfte vom Kettenfördersystem getrennt. Dies macht sich mit vergleichsweise geringem Verschleiß an der Führungsnut des Transportmovers bzw. der Moverführung positiv bemerkbar.

Ganz allgemein kann eine Führungs- und/oder Halteeinrichtung, insbesondere Führungsschienen, des einen Systems, insbesondere des Bahnsystems, jeweils mit einem Bereich der Transportmover zusammenwirken, mit dem das andere System, insbesondere das Transportkettensystem, gerade nicht zusammenwirkt. Dabei kann z.B. eine Führungsschiene des Bahnsystems in eine Führungsnut des Transportmovers eingreifen. Die Führungsnut kann relativ weit oben am Läufer des Transportmovers angeordnet sein.

Es können insofern also die Führungs- und/oder Halteeinrichtung einerseits sowie die Mittel zum Bewegen der Transportmover andererseits miteinander "verzahnt" sein.

Vorzugsweise kann das Transportkettensystem vor dem Bahnsystem angeordnet sein. So kann eine Übergabe vom Transportkettensystem zum Bahnsystem erfolgen.

In einem Kettenglied oder in mehreren Kettengliedern ist erfindungsgemäß ein magnetisch wirksames Material vorgesehen . Dieses kann zumindest teilweise von einer Hygieneschicht bedeckt sein.

Gemäß einer Ausführungsform ist eine Umlenkrolle zum Umlenken der Transportkette im Übergabebereich angeordnet. Ein Antrieb für die Transportkette ist somit vorzugsweise nicht im Übergabebereich vorgesehen, obwohl dies auch möglich wäre. So kann es sich bei der Umlenkrolle auch um eine Antriebsrolle handeln.

Nach einer weiteren Ausführungsform ist in einem Zwischenraum zwischen der Umlenkrolle und dem Bahnsystem wenigstens eine Übergabehilfe, insbesondere eine Übergaberolle mit kleinerem Durchmesser als die Umlenkrolle oder ein Mitnehmer, vorgesehen.

Die Übergabehilfe kann ein magnetisch wirksames und/oder reibungserhöhendes Material aufweisen. Die Übergabehilfe, insbesondere die Umlenkrolle, kann aktiv, vorzugsweise angetrieben, oder passiv, vorzugsweise freilaufend, sein.

Die Übergabehilfe ist insbesondere dann vorteilhaft, wenn der Abstand zwischen den beiden Systemen im Übergabebereich relativ groß ist, z.B. wegen einer relativ großen Umlenkrolle oder aufgrund der Bauform der Linearmotoren. Die Übergaberolle dient dann im Wesentlichen als Stützrolle, z.B. ohne Antrieb als Kunststoff- oder Edelstahlrolle. Auch eine angetriebene Rolle mit gummierter Oberfläche oder eine angetriebene Rolle mit Eisen oder einer ferromagnetischen Oberfläche bzw. entsprechenden Elementen auf dem Außenmantel sind denkbar. Auch ein formschlüssiger und/oder magnetischer Mitnehmer kann als Übergabehilfe dienen, insbesondere um mit diesen zusätzlichen Mitteln den Transportmover vorwärts zu treiben.

Der Transportmover wird auf diese Weise unterstützt und/oder zusätzlich angetrieben. Der Antrieb der Übergabehilfe kann durch einen mechanischen Abgriff an der Umlenkrolle der Transportkette erfolgen.

Gemäß einer weiteren Ausführungsform ist die Transportkette im Übergabebereich derart relativ zum Bahnsystem geführt, dass sich die auf den Transportmover wirkenden magnetischen Kräfte beim Übergang vom Transportkettensystem zum Bahnsystem verringern.

An den Schnittstellen zwischen dem Transportkettensystem und dem Bahnsystem sollte die Magnetkraft zwischen Transportmover und Kettenglied durch externe Einflüsse zumindest etwas abgeschwächt werden. Dies ist besonders an der Schnittstelle wichtig, an der der Transportmover vom Kettenglied auf das Bahnsystem übergeht.

Bevorzugt taucht im Übergabebereich die Transportkette nach unten ab oder weicht seitlich aus.

Die am Bahnsystem vorgesehenen Führungen für die Transportmover können die Transportmover jeweils im Übergabebereich an einer Position übernehmen, die vertikal bzw. horizontal außerhalb eines Sollkurses, insbesondere einer Mittelachse, für das Bahnsystem liegt und so Transportmover kontinuierlich z.B. von unten oder von der Seite kommend auf diesen Sollkurs führen.

Dadurch, dass sich die Transportkette nach unten bzw. seitlich von der Bahn der Transportmover wegbewegt, werden die magnetischen Kräfte geringer, wenn der Transportmover gerade weiter bewegt wird.

Bereits mit der Umlenkrolle der Transportkette kann die Ablösung von den Magnetkräften sichergestellt werden, da die Bereiche mit magnetisch wirksamen Material in den Kettengliedern dort nach unten abtauchen. Die im Wesentlichen vertikalen Kräfte auf die Transportmover werden dabei mit den überstehenden Führungsschienen des Bahnsystems aufgenommen.

Das Abtauchen nach unten an der Umlenkrolle der Transportkette ist nur eine Variante. Unterstützt werden kann das Trennen der magnetischen Verbindung der Transportkette zusätzlich, wenn diese etwas tiefer als der erste Linearmotor an der Schnittstelle angeordnet ist. Die beiden seitlichen Führungen aus dem Bahnsystem sind dann etwas nach unten gezogen. Ist ein Transportmover über der Transportkette vollständig in die Führungen eingefädelt, hebt die leicht nach oben geschwungene Führungsschiene den Transportmover im Durchlauf über die beiden Führungsnuten etwas nach oben ab und vergrößert dadurch den Abstand zwischen Permanentmagnet und Kettenglied im Übergabebereich in der Bewegungsrichtung kontinuierlich.

Gemäß einer weiteren Variante kann im Übergabebereich die Transportkette schräg neben den Endbereich des ersten Linearmotors des Bahnsystems geführt werden. Der Antrieb bzw. die Antriebsrolle oder die Umlenkrolle der Transportkette sitzt insbesondere schräg neben dem Linearmotor bzw. in einem Winkel zur Transportrichtung der Transportmover.

Die Führungsschienen des Bahnsystems, welche in seitliche Führungsnuten der Transportmover eingreifen, stehen hier über den Linearmotor in Richtung Transportkette bis in deren geraden Abschnitt hinaus und dienen als Einfädelhilfe für die Transportmover. Es entstehen Scherkräfte zwischen dem Transportmover und dem magnetisch wirksamen Material des Kettengliedes sowie Seitenkräfte auf die beiden Führungsschienen, wenn die Kettenglieder unter einem Transportmover seitlich unter dessen Permanentmagnet wegbewegt werden. Der Vortrieb wird noch ausgenutzt, die Vortriebskraft schwächt sich über den Fahrweg im Übergabebereich ab und vertikale Kräfte auf die Führungsschienen werden minimiert.

Das Transportkettensystem ist dazu ausgebildet, einen Durchgang für einen Bediener bereitzustellen oder freizugeben.

So kann der Bediener auch bei langen Transportkettensystemen diese leicht passieren, z.B. zu Wartungszwecken.

Vorzugsweise kann die Transportkette eine geschlossene, z.B. ringförmige, Transportstrecke bilden. Alternativ ergibt sich in einem Gesamtsystem eine ringförmige Gesamtstrecke, von der zumindest eine Teilstrecke als magnetisches Bahnsystem und zumindest eine andere Teilstrecke als Transportkettensystem ausgebildet ist.

Der Durchgang kann insbesondere permanent ausgebildet sein, beispielsweise in Form einer von der Transportkette gebildeten Brücke. Besonders Transportmover-Einheiten mit Permanentmagneten in den Läufern eignen sich dafür sehr gut, da diese nicht nur größere Lücken zwischen benachbarten Schienenelementen kompensieren können, sondern auch das Durchfahren relativ großer Anstiege sowie von in Fahrtrichtung nach oben oder unten gebogenen Streckenabschnitten ermöglichen.

Die Permanentmagnete können vergleichsweise groß gewählt werden, damit immer noch genügend Haftung mit dem magnetisch wirksamen Material der Kettenglieder auf einem Steigungs- oder Gefällestück besteht. Ein mögliches Beispiel für einen derartigen Streckenabschnitt ist eine Rückführungsstrecke für leere Transportmover. An ein solches Teilstück werden kaum Anforderungen z.B. hinsichtlich Laufruhe oder Steilheit gestellt.

Gemäß einer Ausführungsform ist der Durchgang temporär bereitstellbar oder freigebbar, insbesondere durch Ausschwenken eines Teils der Transportkette und/oder der Kettenglieder zur Seite, nach oben und/oder nach unten.

Der Durchgang kann beispielswiese durch ein Bewegen eines, vorzugsweise in den Übergabebereich zu einem magnetischen Bahnsystem mündenden, Endbereichs der Transportkette entstehen.

Vorzugsweise kann ein Teil der Transportkette ausgeschwenkt werden, wobei insbesondere das Spiel zwischen benachbarten Kettengliedern ausgenutzt werden kann.

Die Transportkette kann insbesondere mitsamt Umlenkrolle bzw. Antrieb und Kettenführung im Endbereich an einer Schwenkeinrichtung gelagert sein, welche z.B. als Spannstück ausgebildet sein kann. Damit kann ein Teilstück im Endbereich seitlich oder nach oben oder unten ausgeschwenkt werden, um einen Durchgang zu ermöglichen. Das Teilstück kann dann nach Erreichen der Betriebsstellung wieder verriegelt bzw. vorgespannt werden.

Die Eignung der Transportkette für enge Kurvenradien sowie das ohnehin vorhandene Längenspiel, das beispielsweise in einem sogenannten Kettensack an der Antriebseinheit im Endbereich aufgefangen werden kann, ermöglichen die Beweglichkeit bzw. bieten ausreichend Spiel in Quer- und Längsrichtung. Vorzugsweise wird daher das Ende mit der Antriebseinheit seitlich auslenkbar gestaltet.

Alternativ kann ein Teilstück der Transportkette im Endbereich nach oben weggeklappt werden, um einen Durchgang zu ermöglichen. Dabei kann ein Spannstück eingesetzt werden. Ein Teilstück der Kettenführung kann gelöst und entspannt werden, ehe das Ende der Transportkette hochgeklappt wird.

In einer bevorzugten Ausgestaltung kann die Transportkette vor dem klappbaren Durchgangsbereich enden. Das Transportkettensystem wird im Durchgangsbereich mit einem klappbaren Spannstück verlängert, wobei das Fördermittel dort vorzugsweise auch eine Gliederkette ist, welches mit dem Antrieb für die Transportkette gekoppelt sein kann.

Alle hier beschriebenen Aspekte, Ausführungsformen und Merkmale der Erfindung können, insbesondere auch losgelöst von der konkreten Ausgestaltung, in deren Zusammenhang sie erwähnt werden, jeweils miteinander kombiniert werden,

Die Erfindung wird im Folgenden beispielhaft unter Bezugnahme auf die Zeichnungen beschrieben. Es zeigen:
- Fig. 1: eine frontale Schnittansicht einer ersten Ausführungsform einer Transportkette mit Transportmover,
- Fig. 2: eine frontale Schnittansicht einer zweiten Ausführungsform einer Transportkette mit Transportmover,
- Fig. 3: eine seitliche Schnittansicht einer ersten Ausführungsform eines Transportkettensystems am Übergabebereich zu einem Bahnsystem,
- Fig. 4: eine seitliche Schnittansicht einer zweiten Ausführungsform eines Transportkettensystems am Übergabebereich zu einem Bahnsystem,
- Fig. 5: eine seitliche Schnittansicht einer dritten Ausführungsform eines Transportkettensystems am Übergabebereich zu einem Bahnsystem,
- Fig. 6: eine Draufsicht einer vierten Ausführungsform eines Transportkettensystems am Übergabebereich zu einem Bahnsystem,
- Fig. 7: eine Draufsicht einer Ausführungsform einer Kombination aus Transportkettensystem und Bahnsystem,
- Fig. 8: eine Draufsicht einer ersten Ausführungsform eines Durchgangs eines Transportkettensystems, und
- Fig. 9: eine Seitenansicht einer zweiten Ausführungsform eines Durchgangs eines Transportkettensystems.

Zunächst ist zu bemerken, dass die dargestellten Ausführungsformen rein beispielhafter Natur sind. Die Merkmale einer Ausführungsform können auch beliebig mit Merkmalen einer anderen Ausführungsform kombiniert werden.

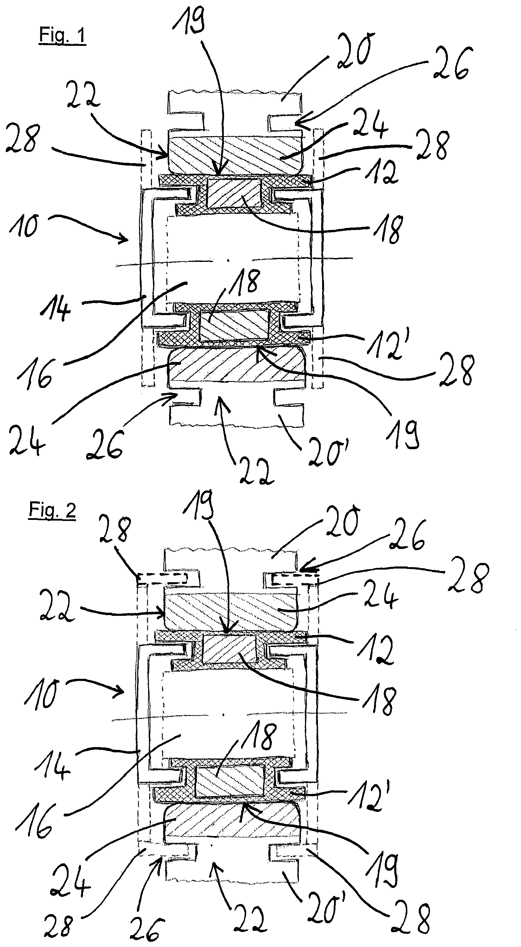

Fig. 1 zeigt eine Transportkette 10 mit einem oberen Kettenglied 12 und einem unteren Kettenglied 12'. Die Kettenglieder 12, 12' werden von seitlichen Kettenführungen 14 gehalten und gleiten auf diesen.

Mehrere Kettenglieder 12, 12' hängen zusammen und bilden die, insbesondere endlose, Transportkette 10. An einem Endbereich der Transportkette 10 kann ein Antrieb vorgesehen sein, vorzugsweise am Übergang von der Transportkette 10 zu einem magnetischen Bahnsystem. Am anderen Endbereich kann hingegen eine gestrichelt dargestellte Umlenkrolle 16 angeordnet sein, welche die Transportkette 10 umlenkt.

In einem Zentralbereich der Kettenglieder 12, 12' ist ein magnetisch wirksames Material 18 vorgesehen. Dieses ist vollständig, somit auch an einer nach außen gewandten Seite, von einer Hygieneschicht 19 umschlossen. Verschmutzungen können somit nicht in den Bereich des magnetisch wirksamen Materials 18 eindringen.

Auf dem Obertrum und dem Untertrum der Transportkette 10 können Transportmover 20, 20' transportiert werden. Die dem Untertrum zugeordneten Transportmover 20' können somit nicht nur kopfüber zurückgeführt werden, sondern auf diesem Weg bzw. in dieser Lage auch Funktionsbereiche der Bahnstrecke durchlaufen. Beispielsweise können durch die Überkopf-Position Tauch- und/oder Reinigungsvorgänge leicht realisiert werden.

Jeder Transportmover 20, 20' umfasst einen Läufer 22 mit mindestens einem Permanentmagneten 24.

Die Transportmover 20, 20' weisen beidseitige Führungsnuten 26 auf. Diese dienen der Führung der Transportmover 20, 20' in einem vor- oder nachgeschalteten magnetischen Bahnsystem und erleichtern die Übergabe an Schnittstellen zwischen Bahnsystem und Transportkettensystem.

Seitliche Moverführungen 28 können die Transportmover 20, 20' seitlich absichern.

Wie in Fig. 2 gezeigt ist, können die Moverführungen 28 auch abgewinkelt sein und in die Führungsnuten 26 der Transportmover 20, 20' eingreifen. Die Führungsnuten 26 der Transportmover 20, 20' können somit eine Doppelfunktion erfüllen, da sie der Führung sowohl bei magnetischen Bahnsystemen als auch bei Transportkettensystemen dienen können.

Im Obertrum der Transportkette 10 haben die Moverführungen 28 keine oder nur eine geringe Bedeutung.

Vorzugsweise korrespondieren die Führungsnuten 26 mit den Moverführungen 28, sodass die Transportmover 20, 20' nicht aus dem Transportkettensystem entfernt werden können. Insbesondere im Überkopf-Betrieb kann der Transportmover 20' geführt und abgestützt werden. Die Transportkette 10 dient hierbei vorzugsweise nicht als Auflage des Transportmovers 20', sondern ausschließlich zum Antrieb bzw. Vorschub.

Auf die Moverführungen 28 kann gegebenenfalls, zumindest auf Teilstrecken, insbesondere auf geraden Abschnitten, verzichtet werden.

Durch das magnetisch wirksame Material 18 erfolgt eine Zentrierung der Transportmover 20, 20', bevorzugt zur Mitte der Transportkette 10 hin. Ein Verdrehen der Transportmover 20, 20' wird auf diese Weise verhindert. Daher kann es ausreichen, wenn nur im Anfangsbereich einer Transportkette 10 und/oder in Kurvenabschnitten eine Moverführung 28 vorgesehen ist.

Optional kann das magnetisch wirksame Material 18 im oberen Bereich der Kettenglieder 12, 12' weiter in die beiden seitlichen Auflagebereiche hinein gezogen und dort auch im Inneren angebracht sein. Die Wirkung der Permanentmagnete 24 in den Transportmovern 20, 20' könnte dann über die gesamte Breite eines Kettengliedes 12, 12' ausgenutzt werden, ohne die Reibung zwischen der Transportkette 10 und der Kettenführung 14 zu erhöhen.

Die Stärke des magnetisch wirksamen Materials 18 kann derart gewählt sein, dass durch die Anziehungskräfte zwischen dem Kettenglied 12, 12' und dem Permanentmagneten 24 auch ein Überkopf-Betrieb ermöglicht wird.

Aus sicherheitstechnischen Gründen kann, z.B. wenn die Magnetkraft so groß ist, dass die Transportmover 20, 20' nicht mit der Hand angehalten werden können, zum besseren Kapseln des Fahrweges die Moverführung 28 bzw. die Führungsnut 26 im Transportmover 20, 20' verwendet werden.

Die Transportmover 20, 20' können im Transportkettensystem mit konstanter Geschwindigkeit bewegt werden, sowohl auf Geraden als auch in Kurven. Denkbar sind daher auch leicht angestellte Kettenführungen 14 im Kurvenbereich, z.B. Steilkurven. Alternativ kann auch der Kurvenradius mit einer Umlenkrolle 16, einem Bogenrad oder einer gebogenen Kettenführung entsprechend groß gewählt werden.

Auf diese Weise kann ein kostengünstiges Transportsystem geschaffen werden, welches in ein magnetisches Bahnsystem mit Linearmotortechnik integrierbar ist. Einzelne Streckenbereiche können somit kostengünstig ersetzt werden.

Neben der Funktion des gesamten Transportsystems werden dabei auch die Anforderungen an die Hygiene erfüllt, sodass das Transportkettensystem auch z.B. im Bereich der Lebensmittelverarbeitung eingesetzt werden kann.

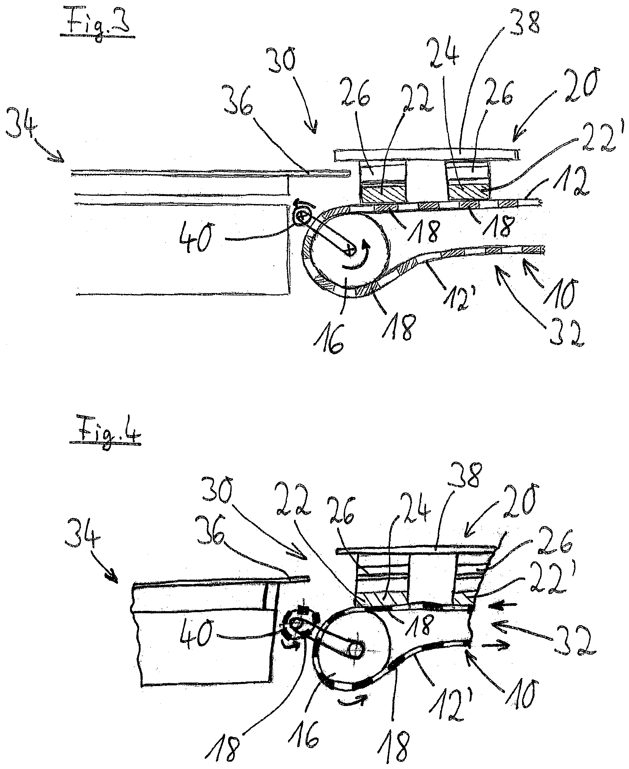

In Fig. 3 ist ein Übergabebereich 30 zwischen einem Transportkettensystem 32 und einem magnetischen Bahnsystem 34 gezeigt.

Das Bahnsystem 34 umfasst beidseitig eine als Führungsschiene 36 ausgebildete Führungs- und/oder Halteeinrichtung. Die Führungsschienen 36 können in die Führungsnuten 26 des Transportmovers 20 eingreifen.

Die Führungsschienen 36 stehen über das Bahnende des Bahnsystems 34 in Richtung Transportkette 10 vor und dienen als Ein- bzw. Ausfädelhilfe und/oder Brücke für die Transportmover 20, welche dort in der Regel in der ersten Phase beim Durchlaufen dieser Schnittstelle vom abgebenden System bewegt bzw. angetrieben werden, zumindest an der Schnittstelle vom Transportkettensystem 32 auf das Bahnsystem 34. Dort hat dies mehr Bedeutung als bei umgekehrter Übergabe.

Der Transportmover 20 ist als Doppelmover oder Tandemmover ausgebildet, d.h. unter einem gemeinsamen Träger 38 sind zwei Läufer 22, 22' vorgesehen. Zuerst wird ein vorderer Läufer 22 auf den Übergang gefahren, während der Läufer 22' noch Magnetkontakt hat und für den notwendigen Vortrieb sorgt. Parallel dazu bzw. kurz danach wird der vordere Läufer 22 schon vom Linearmotor erfasst und sorgt für ein Einziehen. Derartige Transportmover 20 sind somit für eine sichere Übergabe besonders geeignet.

Ergänzend oder alternativ wird der Transportmover 20 unter Ausnutzung der durch seine Geschwindigkeit vorhandenen kinetischen Energie ein- oder ausgeschleust, indem der Transportmover 20 dabei gewissermaßen von einem System in das andere "geschossen" wird.

Auch ein Transportmover 20 mit einem einzelnen Läufer 22 wird genauso betrieben bzw. verhält sich ebenso. Die Lücke zwischen den Systemen 32, 34 muss dann allerdings geringer sein.

Um die Übergabe weiter zu erleichtern, kann eine als Übergaberolle 40 ausgebildete Übergabehilfe vorgesehen sein. Die Übergaberolle 40 ist im Übergabebereich 30 zwischen der Umlenkrolle 16 und dem Bahnsystem 34 angeordnet und füllt die Lücke zwischen diesen Bauteilen aus. Der Durchmesser der Übergaberolle 40 ist insbesondere kleiner als der Durchmesser der Umlenkrolle 16.

Die Übergaberolle 40 kann angetrieben oder passiv sein. Bevorzugt weist diese ein reibungserhöhtes Material auf oder, wie in Fig. 4 gezeigt, magnetisch wirksames Material 18.

Der Antrieb der Übergaberolle 40 kann von der Umlenkrolle 16 abgeleitet sein. Alternativ kann die Übergaberolle 40 auch einen eigenen Antrieb umfassen.

Durch das Abtauchen der Kettenglieder 12 im oberen Bereich der Umlenkrolle 16 verringert sich die magnetische Kraft auf die Läufer 22, 22', sodass sich die Transportmover 20 lösen und auf das Bahnsystem 34 übergeben werden können.

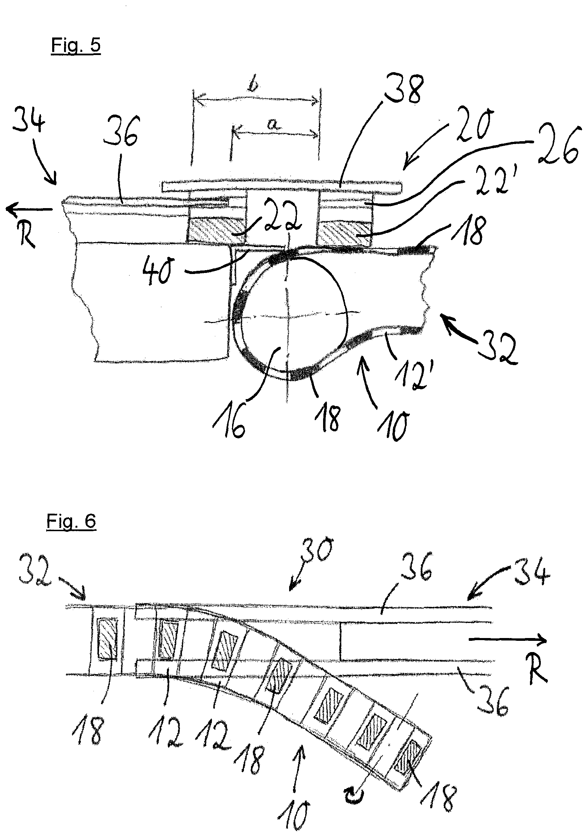

Wie in Fig. 5 gezeigt ist, kann die Übergabehilfe 40 auch lediglich eine Verlängerung der Gleit- bzw. Aufstandsfläche sein. Befestigt ist die Übergabehilfe 40 in diesem Fall vorzugsweise an einem Linearmotor des Bahnsystems 34 bzw. dessen Stirnseite. Die sich durch den Radius der Umlenkrolle 16 ergebende Lücke wird auf diese Weise mittels der Übergabehilfe 40 überbrückt.

Die Führungsschiene 36 oberhalb eines Linearmotors kann dann im Endbereich mit diesem abschließen und muss nicht in Richtung der Transportkette 10 auskragen.

Der Abstand zwischen den Läufern 22, 22', welche auch als unterschiedliche, zusammenhängende Transportmover 20 angesehen werden können, wird bevorzugt derart groß gewählt, dass das in Transportrichtung R zuerst mit dem vorausfahrenden Läufer 22 erreichte Bahnsystem 34 über diesen Läufer 22 bereits für einen ausreichenden Vortrieb sorgt bzw. dass das in Transportrichtung R noch mit dem hinteren, nachfahrenden Läufer 22' befahrene Transportkettensystem 32 über diesen Läufer 22' noch für einen ausreichenden Vortrieb sorgt.

Auf diese Weise kann der Übergabebereich 30 zwischen dem Bahnsystem 34 und dem Transportkettensystem 32 zuverlässig überbrückt bzw. durchfahren werden.

Der Abstand b zwischen zwei zusammenhängenden Transportmovern 20 bzw. zwischen zwei Läufern 22, 22' eines Transportmovers 20 wird also bevorzugt so groß gewählt, dass zumindest immer ein Transportmover bzw. ein Läufer 22, 22' in einem System, also insbesondere dem Bahnsystem 34 oder dem Transportkettensystem 32, voll antriebswirksam im Eingriff ist. Folglich wird bevorzugt der Abstand b größer gewählt als der Abstand a zwischen den wirksamen Bereichen der beiden Systeme 32, 34.

Eine Alternative zu einem Abtauchen ist in Fig. 6 gezeigt. Darin wird die Transportkette seitlich von einem geraden Sollkurs ausgelenkt. Die Führungsschienen 36 des Bahnsystems 34 stehen in Richtung Transportkette 12 bis in deren geraden Abschnitt hinaus und dienen als Einfädelhilfe für Transportmover 20.

Ist ein Transportmover 20 von den Führungsschienen 36 erfasst, entstehen Scherkräfte zwischen dem Transportmover 20 und dem magnetisch wirksamen Material 18 des Kettengliedes 12 sowie Seitenkräfte auf die beiden Führungsschienen 36, wenn die Kettenglieder 12 unter einem Transportmover 20 seitlich unter dessen Permanentmagneten 24 wegbewegt werden.

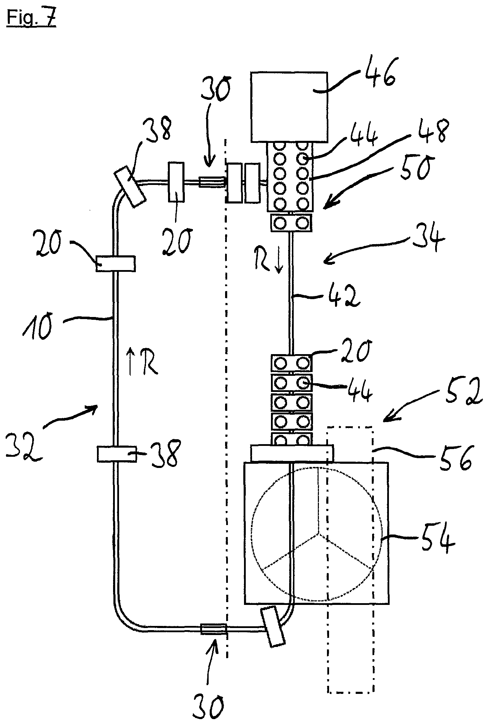

Fig. 7 zeigt ein Bahnsystem 34, auf dem sich Transportmover 20 auf einer Bahn 42 in Transportrichtung R bewegen.

Die Transportmover 20 weisen einen Tandem-Träger 38 auf, auf dem zwei als Portionen 44 ausgebildete Produkte nebeneinander aufgenommen werden können. Die Träger 38 kragen seitlich über die Bahn 42 aus.

Die Portionen 44 gelangen von einer mehrspurigen Aufschneidevorrichtung 46, vorzugsweise einem Hochgeschwindigkeits-Slicer, auf ein Förderband 48. Leere Transportmover 20 werden unter dem Förderband 48 durchgeführt, sodass diese an einem als Übergabeeinrichtung 50 ausgebildeten Funktionspunkt die Portionen 44 empfangen können.

Die mit Portionen 44 gefüllten Transportmover 20 werden anschließend zu einem als Verpackungsvorrichtung 52 ausgebildeten Funktionspunkt transportiert.

Ein Picker 54 entnimmt dort die Portionen 44 vom Tandem-Träger 38 der Transportmover 20 und übergibt diese an einen Verpacker 56.

Zum Rücktransport der leeren Transportmover 20 zur Aufschneidevorrichtung 46 ist ein Transportkettensystem 32 vorgesehen. Die Transportkette 10 dient dabei als Pufferzone für die Transportmover 20 mit leeren Trägern.

Zwischen dem Bahnsystem 34 und dem Transportkettensystem 32 ist jeweils ein Übergabebereich 30 vorgesehen. Die Übergabe kann dabei wie im Zusammenhang mit den Fig. 3 bis 6 beschrieben erfolgen.

Ein Bahnsystem 34 lässt sich somit auf einfache Weise mit einem Transportkettensystem 32 kombinieren.

Ein Transportmover 20 kann aus dem Bahnsystem 34 mit einer definierten Geschwindigkeit mit Hilfe des Linearmotors ausgeschleust werden. Das Bahnsystem 34 verliert den direkten Bezug zum Transportmover 20, kennt aber aufgrund einer den Betrieb des Systems steuernden Steuerung die Anzahl der ausgeschleusten Transportmover 20.

Die entsprechende Anzahl an Transportmovern 20 muss am Ende des Transportkettensystems 32 wieder in das Bahnsystem 34 eingeschleust werden. Die ankommenden Transportmover 20 werden in der Steuerung erfasst, indem die Magnetkraft an einem ankommenden Transportmover 20 erkannt wird. Ein Doppelmover 20 wird beim Kontakt des ersten Permanentmagneten 24 des Transportmovers 20 mit dem Linearmotor des Bahnsystems 34 eingezogen.

Die Kombination aus Bahnsystem 34 und Transportkettensystem 32 ermöglicht insgesamt ein kostengünstiges Transportsystem mit einem einfachen, standardisierbaren Aufbau.

Mit dem Transportkettensystem 32 ist das Durchfahren von Steigungen und Gefällen möglich. Auch eine Überkopf-Bewegung kann durchgeführt werden.

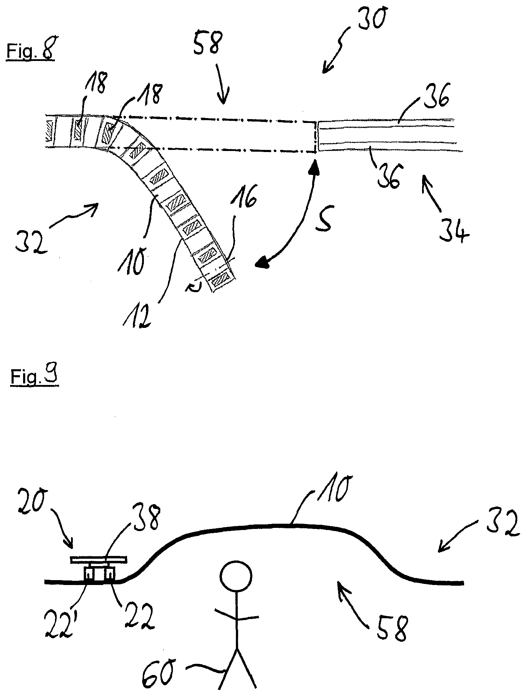

In Fig. 8 ist ein Übergabebereich 30 zwischen einem Transportkettensystem 32 und einem Bahnsystem 34 gezeigt. Um einen vorübergehenden Durchgang 58 für einen Bediener zu schaffen, kann die Transportkette 10 samt Umlenkrolle 16 an ihrem Endbereich in Schwenkrichtung S ausgelenkt werden.

Das Spiel zwischen den einzelnen Kettengliedern 12 ermöglicht die seitliche Auslenkbewegung.

Im Betrieb verläuft die Transportkette 10 gerade, d.h. die Transportmover 20 können vom Transportkettensystem 32 an das Bahnsystem 34 übergeben werden. Findet kein Betrieb statt, so kann die Transportkette 10 seitlich verschwenkt werden, damit ein Bediener die Anlage passieren kann, um diese z.B. zu warten.

Der Durchgang 58 ist vorzugsweise an einem Übergabebereich 30 vorgesehen. Alternativ kann dieser auch zwischen zwei aneinandergrenzenden Transportketten 10 angeordnet sein.

Gemäß der Ausführungsform, welche in Fig. 9 dargestellt ist, ist der Durchgang 58 permanent als Brücke ausgebildet. Ein Bediener 60 kann somit die Anlage passieren, ohne dass ein Teilstück der Transportkette 10 verschwenkt werden muss. Ein Passieren ist somit auch während des Betriebs möglich.

Die Transportkette 10 ermöglicht es, Förderwege in komplexen Anlagen auch auf recht kurzen Wegen, beispielsweise mit relativ großen Steigungen, von Funktionspunkten 50, 52 nach oben weg zuführen. Dadurch wird an den Aufstellorten Platz gespart und es werden Durchgänge 58, Zugänge und Freiräume zu wichtigen Funktionsbereichen und Anlagenteilen geschaffen. Durch das streckenweise hochgesetzte Transportniveau werden Reinigungs-, Service-, Einrichtungs- und/oder Kontrollarbeiten deutlich erleichtert.

### Bezugszeichenliste

- 10: Transportkette
- 12: oberes Kettenglied
- 12': unteres Kettenglied
- 14: Kettenführung
- 16: Umlenkrolle
- 18: magnetisch wirksames Material
- 19: Hygieneschicht
- 20, 20': Transportmover
- 22, 22': Läufer
- 24: Permanentmagnet
- 26: Führungsnut
- 28: Moverführung
- 30: Übergabebereich
- 32: Transportkettensystem
- 34: Bahnsystem
- 36: Führungsschiene, Führungs- und/oder Halteeinrichtung
- 38: Träger
- 40: Übergaberolle, Übergabehilfe
- 42: Bahn
- 44: Portion, Produkt
- 46: Aufschneidevorrichtung
- 48: Förderband
- 50: Übergabeeinrichtung, Funktionspunkt
- 52: Verpackungsvorrichtung, Funktionspunkt
- 54: Picker
- 56: Verpacker
- 58: Durchgang
- 60: Bediener

- R: Transportrichtung
- S: Schwenkrichtung
- a, b: Abstand

## Patentansprüche

1. Vorrichtung zum Bewegen von Produkten (44),
mit einer Mehrzahl individuell bewegbarer Transportmover (20, 20') zum Transport der Produkte (44),
mit einem Bahnsystem für die Transportmover (20, 20'), in welchem die Transportmover (20, 20') entlang wenigstens einer vorgegebenen Bahn in einer Transportrichtung (R) bewegbar sind,
mit einer Steuereinrichtung zum Steuern der Bewegungen der Transportmover (20, 20') in dem Bahnsystem (34),
wobei die Transportmover (20, 20') jeweils zumindest einen mit dem Bahnsystem (34) zusammenwirkenden Läufer (22, 22') und wenigstens einen am Läufer (22, 22') angebrachten Träger (38) für Produkte (44) umfassen, und mit einem dem Bahnsystem (34) vorgelagerten, dem Bahnsystem (34) nachgelagerten und/oder in das Bahnsystem (34) integrierten Transportkettensystem (32), wobei das Transportkettensystem (32) zumindest eine umlaufende Transportkette (10) umfasst,
und wobei der Läufer (22,22') zumindest einen Permanentmagneten (24) umfasst,
**dadurch gekennzeichnet, dass** die Transportkette (10) mehrere zusammenhängende Kettenglieder (12, 12') und wenigstens einen Antrieb zum Antreiben der Kettenglieder (12, 12') umfasst, wobei die Transportmover (20, 20') mittels der Transportkette (10) bewegbar sind und der wenigstens eine Läufer (22, 22') mit einem der Kettenglieder (12, 12') zusammenwirkt,
wobei die Transportmover (20, 20') jeweils über ihren Läufer (22, 22') an dem Kettenglied (12, 12') durch Magnetkraft gehalten sind, und
wobei magnetisch wirksames Material (18) des Kettengliedes (12, 12') zumindest teilweise von einer Hygieneschicht (19) bedeckt ist.

2. Vorrichtung zum Bewegen von Produkten (44) nach Anspruch 1,
**dadurch gekennzeichnet, dass**
nur jedes n-te Kettenglied (12, 12') ein magnetisch wirksames Material (18) aufweist, wobei n eine ganze Zahl größer als 1 ist und insbesondere n = 2 oder n = 3 gilt.

3. Vorrichtung zum Bewegen von Produkten (44) nach Anspruch 1 oder 2,
wobei wenigstens ein Übergabebereich (30) vorgesehen ist, an dem die Transportmover (20, 20') zwischen dem Bahnsystem (34) und dem Kettensystem übergebbar sind, und
wobei das Bahnsystem (34) und das Transportkettensystem (32) im Übergabebereich (30) mit einer Führungs- und/oder Halteeinrichtung (36) für die Transportmover (20, 20') einander überlappen.

4. Vorrichtung nach Anspruch 3,
**dadurch gekennzeichnet, dass**
eine Umlenkrolle (16) zum Umlenken der Transportkette (10) im Übergabebereich (30) angeordnet ist.

5. Vorrichtung nach Anspruch 4,
**dadurch gekennzeichnet, dass**
in einem Zwischenraum zwischen der Umlenkrolle (16) und dem Bahnsystem (34) wenigstens eine Übergabehilfe (40), insbesondere eine Übergaberolle (40) mit kleinerem Durchmesser als die Umlenkrolle (16) oder ein Mitnehmer, vorgesehen ist.

6. Vorrichtung nach einem der Ansprüche 3 bis 5,
**dadurch gekennzeichnet, dass**
die Transportkette (10) im Übergabebereich (30) derart relativ zum Bahnsystem (34) geführt ist, dass sich die auf den Transportmover (20, 20') wirkenden magnetischen Kräfte beim Übergang vom Transportkettensystem (32) zum Bahnsystem (34) verringern.

7. Vorrichtung nach einem der Ansprüche 3 bis 6,
**dadurch gekennzeichnet, dass**
im Übergabebereich (30) die Transportkette (10) nach unten abtaucht oder seitlich ausweicht.

8. Vorrichtung zum Bewegen von Produkten (44) nach einem der vorhergehenden Ansprüche,
wobei das Transportkettensystem (32) dazu ausgebildet ist, einen Durchgang (58) für einen Bediener (60) bereitzustellen oder freizugeben.

9. Vorrichtung nach Anspruch 8,
**dadurch gekennzeichnet, dass**
der Durchgang (58) temporär bereitstellbar oder freigebbar ist, insbesondere durch Ausschwenken eines Teils der Transportkette (10) und/oder eines Teils der Kettenglieder (12, 12') zur Seite, nach oben und/oder nach unten.

10. Vorrichtung nach einem der vorhergehenden Ansprüche,
**dadurch gekennzeichnet, dass**
das magnetisch wirksame Material (18) vollständig von der Hygieneschicht (19) umschlossen ist.

11. Vorrichtung nach einem der vorhergehenden Ansprüche,
**dadurch gekennzeichnet, dass**
das magnetisch wirksame Material (18) in einem zentralen Bereich des Kettengliedes (12, 12') angeordnet ist.

12. Vorrichtung nach einem der der vorhergehenden Ansprüche,
**dadurch gekennzeichnet, dass**
das magnetisch wirksame Material (18) zumindest zu einem Teil der äußeren Kontur des Kettengliedes (12, 12') geometrisch ähnlich ist.

## Claims

1. An apparatus for moving products (44),
having a plurality of individually movable transport movers (20, 20') for transporting the products (44);
having a path system for the transport movers (20, 20') in which the transport movers (20, 20') are movable along at least one predefined path in a transport direction (R);
having a control device for controlling the movements of the transport movers (20, 20') in the path system (34),
wherein the transport movers (20, 20') each comprise at least one runner (22, 22') which cooperates with the path system (34) and at least one carrier (38) for products (44) which is attached to the runner (22, 22'); and
having a transport chain system (32) which is disposed upstream of the path system (34), which is disposed downstream of the path system (34) and/or which is integrated in the path system (34), with the transport chain system (32) comprising at least one revolving transport chain (10), and with the runner (22, 22') comprising at least one permanent magnet (24), **characterized in that** the transport chain (10) comprises a plurality of contiguous chain members (12, 12') and at least one drive for driving the chain members (12, 12'), with the transport movers (20, 20') being movable by means of the transport chain (10) and the at least one runner (22, 22') cooperating with one of the chain members (12, 12'),
wherein the transport movers (20, 20') are each held via their runners (22, 22') at the chain member (12, 12') by a magnetic force, and wherein magnetically active material (18) of the chain member (12, 12') is at least partly covered by a hygiene layer (19).

2. An apparatus for moving products (44) in accordance with claim 1, **characterized in that**
only every nth chain member (12, 12') has a magnetically active material (18), where n is a whole number greater than 1 and in particular n = 2 or n = 3 applies.

3. An apparatus for moving products (44) in accordance with claim 1 or claim 2,
wherein at least one transfer region (30) is provided at which the transport movers (20, 20') can be transferred between the path system (34) and the chain system; and
wherein the path system (34) and the transport chain system (32) mutually overlap in the transfer region (30) with a guide device and/or holding device (36) for the transport movers (20, 20').

4. An apparatus in accordance with claim 3,
**characterized in that**
a deflection roller (16) for deflecting the transport chain (10) is arranged in the transfer region (30).

5. An apparatus in accordance with claim 4,
**characterized in that**
at least one transfer aid (40), in particular a transfer roller (40) having a smaller diameter than the deflection roller (16) or an entrainer, is provided in an intermediate space between the deflection roller (16) and the path system (34).

6. An apparatus in accordance with any one of the claims 3 to 5,
**characterized in that**
the transport chain (10) is guided relative to the path system (34) in the transfer region (30) in such a manner that the magnetic forces acting on the transport mover (20, 20') are reduced on the transition from the transport chain system (32) to the path system (34).

7. An apparatus in accordance with any one of the claims 3 to 6,
**characterized in that**
the transport chain (10) dips downwardly or deflects laterally in the transfer region (30).

8. An apparatus for moving products (44) in accordance with any one of the preceding claims,
wherein the transport chain system (32) is configured to provide or release a passage (58) for an operator (60).

9. An apparatus in accordance with claim 8,
**characterized in that**
the passage (58) can be temporarily provided or released, in particular by pivoting out a part of the transport chain (10) and/or some of the chain members (12, 12') to the side, upwardly and/or downwardly.

10. An apparatus in accordance with any one of the preceding claims,
**characterized in that**
the magnetically active material (18) is completely surrounded by the hygiene layer (19).

11. An apparatus in accordance with any one of the preceding claims,
**characterized in that**
the magnetically active material (18) is arranged in a central region of the chain member (12, 12').

12. An apparatus in accordance with any one of the preceding claims,
**characterized in that**
the magnetically active material (18) is geometrically similar to at least one part of the outer contour of the chain member (12, 12').

## Revendications

1. Dispositif servant à déplacer des produits (44),
comportant
une pluralité d'organes de transport (20, 20') mobiles individuellement pour transporter les produits (44),
un système de voie pour les organes de transport (20, 20'), dans lequel les organes de transport (20, 20') sont mobiles dans une direction de transport (R) le long d'au moins une voie donnée, et
un moyen de commande pour commander les mouvements des organes de transport (20, 20') dans le système de voie (34),
les organes de transport (20, 20') comprenant chacun au moins un curseur (22, 22') coopérant avec le système de voie (34), et au moins un support (38) monté sur le curseur (22, 22') et destiné aux produits (44),
et
un système de chaîne de transport (32) monté en amont du système de voie (34), en aval du système de voie (34) et/ou intégré dans le système de voie (34), le système de chaîne de transport (32) comprenant au moins une chaîne de transport (10) en circulation,
le curseur (22, 22') comprenant au moins un aimant permanent (24), **caractérisé en ce que**
la chaîne de transport (10) comprend plusieurs maillons de chaîne (12, 12') reliés entre eux et au moins un entraînement pour l'entraînement des maillons de chaîne (12, 12'), les organes de transport (20, 20') étant mobiles à l'aide de la chaîne de transport (10) et ledit au moins un curseur (22, 22') coopérant avec l'un des maillons de chaîne (12, 12'),
les organes de transport (20, 20') étant retenus chacun par force magnétique sur le maillon de chaîne (12, 12') par l'intermédiaire de leur curseur (22, 22'), et
un matériau (18) à effet magnétique du maillon de chaîne (12, 12') étant re-couvert au moins partiellement par une couche d'hygiène (19).

2. Dispositif servant à déplacer des produits (44) selon la revendication 1,
**caractérisé en ce que**
seul un maillon de chaîne sur n (12, 12') présente un matériau (18) à effet magnétique, n étant un nombre entier supérieur à 1 et en particulier n = 2 ou n = 3.

3. Dispositif servant à déplacer des produits (44) selon la revendication 1 ou 2, dans lequel
il est prévu au moins une zone de transfert (30) au niveau de laquelle les organes de transport (20, 20') peuvent être transférés entre le système de voie (34) et le système de chaîne, et
dans la zone de transfert (30), le système de voie (34) et le système de chaîne de transport (32) se chevauchent mutuellement par un moyen de guidage et/ou de retenue (36) pour les organes de transport (20, 20').

4. Dispositif selon la revendication 3,
**caractérisé en ce que**
une poulie de déviation (16) pour dévier la chaîne de transport (10) est disposée dans la zone de transfert (30).

5. Dispositif selon la revendication 4,
**caractérisé en ce que**
au moins un auxiliaire de transfert (40), en particulier une poulie de transfert (40) d'un diamètre inférieur à celui de la poulie de renvoi (16), ou un entraîneur, est prévu(e) dans un espace intermédiaire entre la poulie de renvoi (16) et le système de voie (34).

6. Dispositif selon l'une des revendications 3 à 5,
**caractérisé en ce que**
dans la zone de transfert (30), la chaîne de transport (10) est guidée par rapport au système de voie (34) de telle sorte que les forces magnétiques agissant sur les organes de transport (20, 20') se réduisent au niveau de la transition du système de chaîne de transport (32) vers le système de voie (34).

7. Dispositif selon l'une des revendications 3 à 6,
**caractérisé en ce que**
dans la zone de transfert (30), la chaîne de transport (10) plonge vers le bas ou s'écarte latéralement.

8. Dispositif servant à déplacer des produits (44) selon l'une des revendications précédentes,
dans lequel
le système de chaîne de transport (32) est réalisé de manière à fournir ou libérer un passage (58) pour un opérateur (60).

9. Dispositif selon la revendication 8,
**caractérisé en ce que**
le passage (58) peut être fourni ou libéré temporairement, en particulier en faisant pivoter une partie de la chaîne de transport (10) et/ou une partie des maillons de chaîne (12, 12') sur le côté, vers le haut et/ou vers le bas.

10. Dispositif selon l'une des revendications précédentes,
**caractérisé en ce que**
le matériau (18) à effet magnétique est entouré complètement par la couche d'hygiène (19).

11. Dispositif selon l'une des revendications précédentes,
**caractérisé en ce que**
le matériau (18) à effet magnétique est disposé dans une zone centrale du maillon de chaîne (12, 12').

12. Dispositif selon l'une des revendications précédentes,
**caractérisé en ce que**
sur le plan géométrique, le matériau (18) à effet magnétique ressemble au moins en partie au contour extérieur du maillon de chaîne (12, 12').
